## Europäisches Patentamt
## European Patent Office
## Office européen des brevets

(19)

(11) Veröffentlichungsnummer: **0 050 242**
**B1**

(12) # EUROPÄISCHE PATENTSCHRIFT

(45) Veröffentlichungstag der Patentschrift:
23.04.86

(51) Int. Cl.⁴: **F 16 B 12/32**

(21) Anmeldenummer: **81107756.9**

(22) Anmeldetag: **30.09.81**

(54) **Verbindung für Rahmenteile von Möbeln, insbesondere Büromöbeln.**

(30) Priorität: **18.10.80 DE 3039389**

(43) Veröffentlichungstag der Anmeldung:
**28.04.82 Patentblatt 82/17**

(45) Bekanntmachung des Hinweises auf die Patenterteilung:
**23.04.86 Patentblatt 86/17**

(84) Benannte Vertragsstaaten:
**AT BE CH FR GB IT LI NL**

(56) Entgegenhaltungen:
**BE - A - 651 766**
**FR - A - 1 189 024**
**GB - A - 1 422 116**
**US - A - 3 462 021**
**US - A - 3 859 767**
**US - A - 3 867 050**

**Dubbel, Taschenbuch für den Maschinenbau, 13. Auflage, Band 1, S. 721**

(73) Patentinhaber: **Gesika Büromöbelwerk GmbH & Co. KG, Salzkotter Strasse, D-4787 Geseke (DE)**

(72) Erfinder: **Becker, Norbert, Weringhauser Strasse 15, D-4782 Erwitte 2 (DE)**
Erfinder: **Hildebrandt, Norbert, Grüner Winkel 32, D-4782 Erwitte 1 (DE)**

(74) Vertreter: **Thielking, Bodo, Dipl.-Ing. et al, Patentanwälte Dipl.-Ing. Bodo Thielking Dipl.-Ing. Otto Elbertzhagen Gadderbaumer Strasse 20, D-4800 Bielefeld 1 (DE)**

## Beschreibung

Die Erfindung betrifft eine Verbindung für Rahmenteile von Büromöbeln, mit einem stirnseitig über das erste Rahmenteil vorragenden und darin befestigten Zapfen sowie einem den Zapfen aufnehmenden Gegenstück im zweiten Rahmenteil, ferner mit einer Befestigungsschraube zur Verbindung von Zapfen und Gegenstück, wobei die Befestigungsschraube das Gegenstück quer zur Längsachse des Zapfens durchsetzt und für ein Anpressen des Zapfens an der Schraube gegenüberliegenden Anlageflächen des Gegenstücks ausgebildet ist und der Zapfen zwei winklig zu seiner Längsmittelebene geneigte ebene Anlageflächen aufweist und im Gegenstück ebenfalls geneigte Gegenflächen vorgesehen sind.

Bei einer bekannten Vorrichtung dieser Art (BE-A-651 766) sind die Zapfen als Rohrstücke ausgebildet, welche vergleichsweise dünnwandig ausgebildet sind. Dies hat zur Folge, dass die quer zur Längsachse der Rohrstücke verlaufenden Befestigungsschrauben die Rohrstücke so befestigen, dass diese sich fest an die gegenüberliegenden Wände der zugehörigen Muffe anlegen können. Bei dieser bekannten Verbindung sind die zur Anlage kommenden Wände der Rohrmuffe und des Rohrs im gleichen Winkel zueinander. Durch das Verformen der im Eingriff stehenden Verbindungsteile ist eine Anlage zwischen den ineinander eingreifenden Teilen stets gewährleistet.

Dieses bekannte Prinzip lässt sich jedoch nicht verwenden, wenn eine besonders feste Verbindung, wie sie für Büromöbel unerlässlich ist, hergestellt werden soll, bei denen der Knotenpunkt gleichzeitig klein dimensioniert werden soll.

Auch bei einer anderen bekannten Lösung (US-A-3 462 021) erfolgt die Verbindung eines Gestells über Rohre, die in entsprechende Muffen eingeschoben werden und mit Hilfe von Spannschrauben festgelegt werden, die die Muffe durchsetzen und auf eine Stirnkante des Rechteckrohrs einwirken.

Ausgehend von diesem Stand der Technik liegt der Erfindung die Aufgabe zugrunde, eine Verbindung der eingangs erwähnten Art so auszubilden, dass sie eine besonders hoch belastbare dauerhafte Verbindung für Rahmenteile von Büromöbeln erlaubt, wobei der Knotenpunkt klein bauen soll.

Die Lösung dieser Aufgabe erfolgt erfindungsgemäss dadurch, dass der Neigungswinkel der Anlageflächen geringfügig grösser ist als der Neigungswinkel der Gegenflächen.

Eine solche Ausbildung hat zur Folge, dass der Zapfen massiv ausgebildet werden kann. Dabei ist es möglich, mit Hilfe der Befestigungsschrauben besonders hohe Kräfte im Knotenpunkt zu übertragen.

Die konische Neigung der Anlageflächen und der Gegenflächen führt dazu, dass bei einem Anziehen der Befestigungsschrauben der Zapfen extrem fest gegen die Innenflächen des Gegenstücks gedrückt wird. Die grosse Anpresskraft verteilt sich auf grosse Flächen, so dass die spezifische Flächenpressung bei dieser Verbindung gering bleibt.

Es hat sich als zweckmässig erwiesen, dass die Winkeldifferenz kleiner als 1° ist.

Ferner hat es sich als zweckmässig erwiesen, dass die Anlageflächen und Gegenflächen unter einem spitzen Winkel zur Längsmittelebene des Zapfens bzw. der Aufnahmeöffnung geneigt sind. Durch die spitzwinklige Neigung dieser Flächen ergibt sich eine gewünschte hohe Keilwirkung, die die gewünschte feste Verspannung zwischen Zapfen einerseits und Gegenstücken andererseits unterstützt. Bei einer weiteren Ausführungsform der Erfindung erstreckt sich der Zapfen lediglich über einen Teil der Tiefe der Aufnahmeöffnung des Gegenstücks. Es verbleibt damit ausreichend Platz, um ein weiteres horizontales erstes Rahmenteil an das zweite Rahmenteil anzuschliessen.

Dabei ist es zweckmässig, dass im Gegenstück zwei parallel zueinander angeordnete Befestigungsschrauben vorgesehen sind.

Weitere Merkmale der Ausführungsformen ergeben sich aus den weiteren Unteransprüchen.

Nachstehend werden bevorzugte Ausführungsformen der Erfindung anhand der Zeichnung im einzelnen beschrieben. Es zeigen:

Fig. 1 eine perspektivische Ansicht von Rahmenteilen eines Bürotisches, teilweise in Explosionsdarstellung,

Fig. 2 eine perspektivische Darstellung der Einzelheit bei Teil II gemäss Fig. 1 in grösserem Detail,

Fig. 3 einen Schnitt entlang Ebene III–III in Fig. 4,

Fig. 4 einen Schnitt entlang Ebene IV–IV gemäss Fig. 3,

Fig. 5 eine perspektivische Ansicht eines aus mehreren Rahmenteilen zusammengesetzten Rahmens für ein Eckverbindungsteil.

Im dargestellten Ausführungsbeispiel sind die Beine 1 die ersten Rahmenteile, während die Längsholme 2 die zweiten Rahmenteile sind. Jeweils zwei Beine 1 sind über einen Querholm 3 miteinander verbunden.

An den Ecken, die die Beine 1 jeweils mit den Querholmen 3 bilden, sind Gegenstücke 4 mit Aufnahmeöffnungen 8 vorgesehen.

An den Stirnseiten der als Profilrohre ausgebildeten Längsholme 2 sitzen Zapfen 5, die über die Stirnseiten der Längsholme 2 vorstehen. Die Zapfen 5 sind jeweils in Kammern 19 der Profile befestigt, beispielsweise eingepresst.

Die Zapfen 5 besitzen Anlageflächen 11 und 12, mit denen sie im Zusammenbauzustand an Gegenflächen 9 und 10 in der Aufnahmeöffnung 8 des Gegenstücks 4 liegen. Jeweils eine Befestigungsschraube 6 oder 7 drückt beim Anziehen dieser Schraube die Anlageflächen 11 und 12 gegen die Gegenflächen 9 und 10 des Gegenstücks 4. Dabei liegt die vordere Verbindungsfläche 17 im angezogenen Zustand der Verbindung mit einem Abstand von der gegenüberliegenden Verbindungsfläche 18 entfernt, die sich zwischen den Gegenflächen 9 und 10 erstreckt. An die Anlageflächen 11 und 12 schliessen sich entgegengesetzt geneigte ebene Flächen 15 und 16 am Zapfen 5 und 13 und 14 in der Aufnahmeöffnung 8 an.

Bei einem Anziehen der Befestigungsschrauben 6 und 7 liegt das Zentrum der Zapfen 5 jeweils um den Betrag a gegenüber der senkrechten Ebene 20 durch die übereinanderliegenden Kanten der Aufnahmeöffnung 8 versetzt.

Die Anlageflächen 11 und 12 und deren Gegenflächen 9 und 10 laufen unter einem spitzen Winkel zu der horizontalen Schnittebene gemäss IV–IV. Die genannten Flächen laufen an ihrer den Befestigungsschrauben 6 und 7 abgewandten Seiten in Richtung auf die horizontale Schnittebene zusammen.

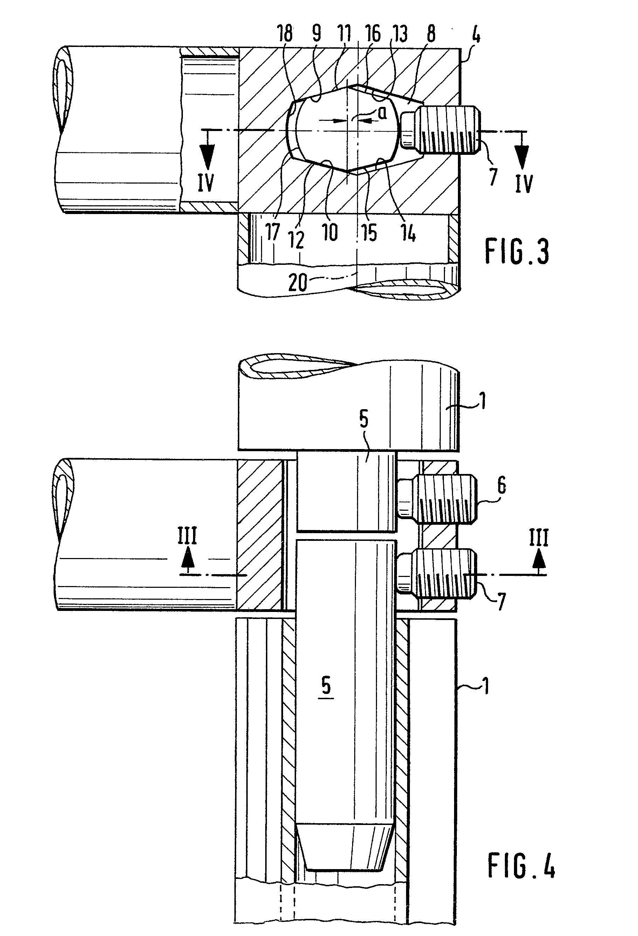

Aus Fig. 4 ist ersichtlich, wie zwei erste Rahmenteile fortlaufend nebeneinander angeordnet und mit dem zweiten Rahmenteil verbunden sind. Hierzu genügt es, die jeweiligen, aus den ersten Rahmenteilen vorragenden Zapfen 5 von beiden Seiten in die Aufnahmeöffnung 8 einzuschieben und dann die Befestigungsschrauben festzuziehen.

Das Lösen der Verbindung ist problemlos möglich.

Bei der Ausführungsform gemäss Fig. 5 sind mehrere horizontale Rahmenteile miteinander verbunden. Als erste Rahmenteile sind die beiden senkrecht zueinander angeordneten Rahmenteile 2′ und 2a′ vorgesehen, welche über ein gemeinsames Verbindungsblech 23 miteinander verbunden sind. Unter dem Verbindungsblech ist ein Stützfuss 22 vorgesehen, der nicht notwendigerweise bei allen Ecklösungen vorgesehen sein muss.

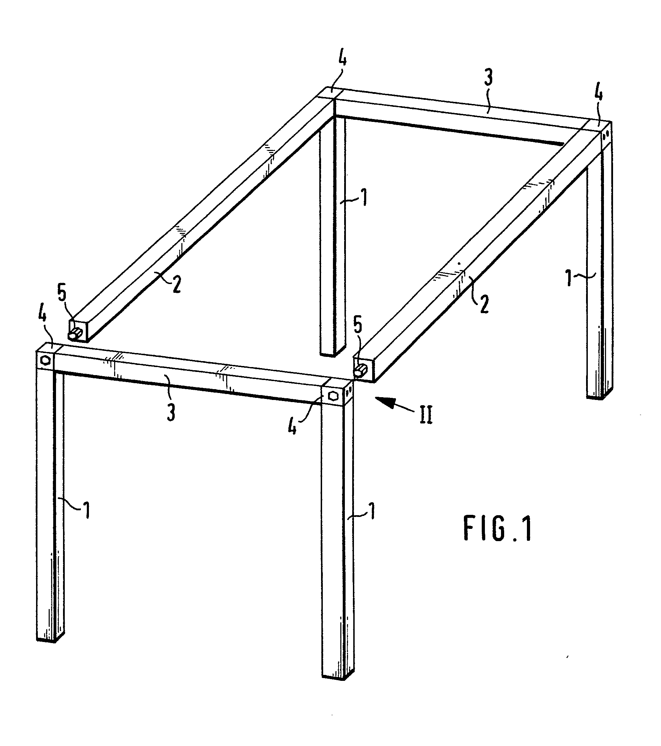

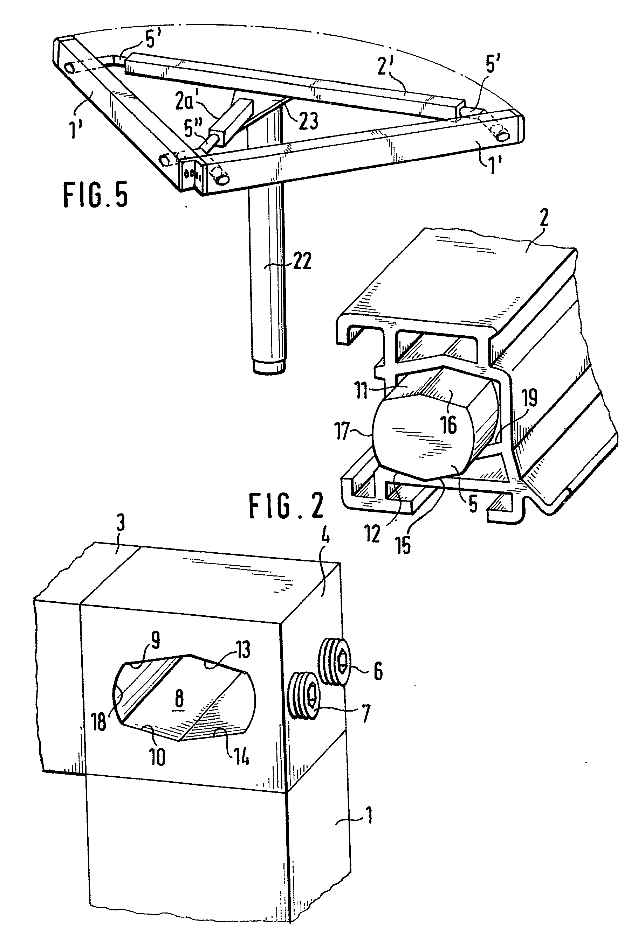

Das erste Rahmenteil 2′ besitzt an seinen beiden Stirnseiten jeweils einen abgewinkelten Zapfen 5′. Das erste Rahmenteil 2a′ besitzt an seiner Stirnseite einen Y-förmigen Zapfen 5″. Die freien Enden der Zapfen 5′ ragen in die entsprechenden Aufnahmeöffnungen der zweiten Rahmenteile 1′. Die freien Schenkel des Y-förmigen Zapfenstücks 5″ ragen ebenfalls in einander benachbarte Aufnahmeöffnungen der zusammenstossenden Enden der ersten Rahmenteile 1′. Die Festlegung der freien Zapfenenden erfolgt innerhalb der Aufnahmeöffnung in der gleichen Weise, wie dies im Zusammenhang mit den Fig. 1 bis 4 beschrieben und dargestellt ist.

Das Verbindungsblech 23 kann so ausgebildet sein, dass der Abstand zwischen dem hinteren Ende des Rahmenteils 2a′ und dem Rahmenteil 2′ verändert werden kann. Die in Fig. 5 dargestellte Konstruktion kann völlig spannungsfrei zusammengebaut werden und beim Aufstellen erforderliche Ausgleichsvorgänge sind ohne weiteres möglich.

## Patentansprüche

1. Verbindung für Rahmenteile (1; 2) von Büromöbeln, mit einem stirnseitig über das erste Rahmenteil vorragenden und darin befestigten Zapfen (5) sowie einem den Zapfen (5) aufnehmenden Gegenstück (4) im zweiten Rahmenteil, ferner mit einer Befestigungsschraube (6; 7) zur Verbindung von Zapfen (5) und Gegenstück (4), wobei die Befestigungsschraube (6; 7) das Gegenstück (4) quer zur Längsachse des Zapfens (5) durchsetzt und für ein Anpressen des Zapfens (5) an der Schraube (6; 7) gegenüberliegenden Anlageflächen (9; 10) des Gegenstücks (4) ausgebildet ist und der Zapfen (5) zwei winklig zu seiner Längsmittelebene (IV–IV) geneigte ebene Anlageflächen (11; 12) aufweist und im Gegenstück (4) ebenfalls geneigte Gegenflächen (9; 10) vorgesehen sind, dadurch gekennzeichnet, dass der Neigungswinkel der Anlageflächen (11; 12) geringfügig grösser ist als der Neigungswinkel der Gegenflächen (9; 10).

2. Verbindung nach Anspruch 1, dadurch gekennzeichnet, dass die Differenz der Neigungswinkel kleiner als 1° ist.

3. Verbindung nach Anspruch 1 und 2, dadurch gekennzeichnet, dass die Anlageflächen (11; 12) und Gegenflächen (9; 10) unter einem spitzen Winkel zur Längsmittelebene (IV–IV) des Zapfens (5) bzw. der Aufnahmeöffnung (8) geneigt sind.

4. Verbindung nach einem der Ansprüche 1 bis 3, dadurch gekennzeichnet, dass der Zapfen (5) sich lediglich über einen Teil der Tiefe der Aufnahmeöffnung (8) des Gegenstücks (4) erstreckt.

5. Verbindung nach einem der Ansprüche 1 bis 4, dadurch gekennzeichnet, dass im Gegenstück (4) zwei parallel zueinander angeordnete Befestigungsschrauben (6; 7) vorgesehen sind.

6. Verbindung nach einem der Ansprüche 1 bis 5, dadurch gekennzeichnet, dass der Zapfen (5) zwei sich an die Anlageflächen (11; 12) anschliessende, zur Schraube (6; 7) weisende weitere ebene Flächen (15; 16) aufweist und das Gegenstück ebenfalls zwei weitere zur Schraube (6; 7) weisende, geneigt Flächen (13; 14) mit einer der Neigung der weiteren ebenen Flächen (15; 16) entsprechenden Neigung aufweist.

7. Verbindung nach einem der Ansprüche 1 bis 6, dadurch gekennzeichnet, dass der Zapfen (5) im Befestigungszustand mit seiner der Angriffsfläche für die Befestigungsschraube (6, 7) gegenüberliegenden Fläche (17) einen Abstand von der dieser Fläche (17) gegenüberliegenden Fläche (18) des Gegenstücks (4) einhält.

8. Verbindung nach einem der Ansprüche 1 bis 7, dadurch gekennzeichnet, dass der Zapfen (5′) abgewinkelt ausgebildet ist.

9. Verbindung nach einem der Ansprüche 1 bis 8, dadurch gekennzeichnet, dass der Zapfen (5″) Y-förmig ausgebildet ist.

## Claims

1. Connection for the frame parts(1; 2) of office furniture having a pin (5) which projects at the end face beyond the first frame part and is fixed in the latter, as well as having a mating part (4) in the second frame part, which mating part (4) accommodates the pin (5) and, moreover, having a fixing screw (6, 7) for connecting the pin (5) and the mating part (4), with the fixing screw (6; 7) penetrating through the mating part (4) transversely to the longitudinal axis of the pin (5), and with oppositely located stop surfaces (9; 10) of the mating part (4) being made for pressing the pin (5) against the screw (6; 7), and with the pin (5) having two flat stop surfaces (11; 12) inclined at an angle to its longitudinal centre plane (IV–IV), and with mating surfaces (9; 10) which are likewise inclined being provided in the mating part (4), characterized in that the angle of inclination of the stop surfaces (11; 12) is slightly larger than the angle of inclination of the mating surfaces (9; 10).

2. Connection according to Claim 1, characterized in that the difference in the angles of inclination is smaller than 1°.

3. Connection according to Claims 1 and 2, characterized in that the stop surfaces (11; 12) an the mating surfaces (9; 10) are inclined at an acute angle to the longitudinal centre plane (IV–IV) of the pin (5) or the accommodation opening (8).

4. Connection according to one of Claims 1 to 3, characterized in that the pin (5) extends merely over one portion of the depth of the accommodation opening (8) of the mating part (4).

5. Connection according to one of Claims 1 to 4, characterized in that the two fixing screws (6; 7) arranged parallel to one another are provided in the mating part (4).

6. Connection according to one of Claims 1 to 5, characterized in that the pin (5) has two further, flat surfaces (15; 16) which adjoin the stop surfaces (11; 12) and point towards the screw (6; 7), and the mating part likewise has two further surfaces (13; 14) which point towards the screw (6; 7) and have an inclination which corresponds to the inclination of the further, flat surfaces (15; 16).

7. Connection according to one of Claims 1 to 6, characterized in that the pin (5), in the fastened condition, with its surface (17) located opposite the engagement surface for the fixing screw (6; 7), maintains a distance from the surface (18) of the mating part (4), which surface (18) is located opposite this surface (17).

8. Connection according to one of Claims 1 to 7, characterized in that the pin (4') has an angled configuration.

9. Connection according to one of Claims 1 to 8, characterized in that the pin (5'') is made in a Y shape.

**Revendications**

1. Assemblage d'éléments (1; 2) de châssis de meubles de bureau, avec un tenon (5) saillant de la face d'extrémité du premier élément de châssis et fixé dans celui-ci ainsi qu'avec une contre-pièce (4) recevant le tenon (5) dans le second élément de châssis, avec en outre une vis de fixation (6; 7) pour l'assemblage du tenon (5) et de la contre-pièce (4), dans lequel la vis de fixation (6; 7) traverse la contre-pièce (4) transversalement par rapport à l'axe longitudinal du tenon (5) et est réalisée de façon à presser le tenon (5) sur des portées (9; 10) de la contre-pièce (4) situées en face de la vis (6; 7) et dans lequel le tenon (5) présente deux portées (11; 12) planes inclinées angulairement sur son plan médian longitudinal (IV–IV) tandis qu'il est également prévu deux faces d'appui (9; 10) inclinées dans la contre-pièce (4), caractérisé en ce que l'angle d'inclinaison des portées (11; 12) planes est légèrement plus grand que l'angle d'inclinaison des faces d'appui (9; 10).

2. Assemblage suivant la revendication 1, caractérisé en ce que la différence entre les angles d'inclinaison est inférieure à 1°.

3. Assemblage suivant une des revendications 1 et 2, caractérisé en ce que les portées (11; 12) planes et les faces d'appui (9; 10) sont inclinées d'un angle aigu sur le plan médian longitudinal (IV–IV) du tenon (5), respectivement de son logement (8).

4. Assemblage suivant l'une ou l'autre des revendications 1 à 3, caractérisé en ce que le tenon (5) ne s'étend que sur une partie de la profondeur du logement (8) de la contre-pièce (4).

5. Assemblage suivant l'une ou l'autre des revendications 1 à 4, caractérisé en ce qu'il est prévu, dans la contre-pièce (4), deux vis de fixation (6; 7) disposées parallèlement l'une à l'autre.

6. Assemblage suivant l'une ou l'autre des revendications 1 à 5, caractérisé en ce que le tenon (5) présente deux faces (15; 16) planes supplémentaires se raccordant aux portées (11; 12) planes et orientées vers la vis (6; 7) et en ce que la contre-pièce (4) présente également deux faces (13; 14) inclinées supplémentaires orientées vers la vis (6; 7) et dont l'inclinaison correspond à l'inclinaison des faces (15; 16) planes supplémentaires.

7. Assemblage suivant l'une ou l'autre des revendications 1 à 6, caractérisé en ce qu'à l'état serré, la face (17) du tenon (5) opposée à la face d'application de la vis de fixation (6; 7) se trouve écartée de la face (18) de la contre-pièce (4) opposée à cette face (17).

8. Assemblage suivant l'une ou l'autre des revendications 1 à 7, caractérisé en ce que le tenon (5') est coudé.

9. Assemblage suivant l'une ou l'autre des revendications 1 à 8, caractérisé en ce que le tenon (5'') a la forme d'un Y.

FIG.1

FIG.5

FIG.2

18 9 11 16 13 8 4

a

IV IV

17 12 10 15 14

20

**FIG.3**

1

5

6

5

7

III III

1

**FIG.4**